# DEMANDE DE BREVET EUROPEEN

(11) **EP 1 921 857 A1**
(43) Date de publication de la demande: **14.05.2008**
(21) Numéro de dépôt: 06123757.4
(22) Date de dépôt: 09.11.2006
(51) Int. Cl.: H04N 7/16, H04N 5/00

(54) **Module de contrôle d'accès et de décryption pour unité hôte**

(71) Demandeur: SmarDTV S.A., 1033 Cheseaux-sur-Lausanne (CH)
(72) Inventeur: Genevois, Christophe, 30500, Saint Brès (FR)
(74) Mandataire: Wenger, Joel-Théophile

(57) **Abrégé**

La présente invention concerne une unité hôte destinée à recevoir au moins un flux de données numériques encryptées à laquelle est connecté un module CAM de contrôle d'accès et de décryptage du flux. Le module CAM et l'unité hôte sont reliées entre eux par une interface comportant un bus parallèle dans lequel transitent les données numériques du flux et un bus dans lequel transitent des données de commande, les deux bus échangeant des données de manière bidirectionnelle. Le module et l'unité hôte comprennent chacun un dispositif d'entrée sortie série et un dispositif d'aiguillage connecté d'une part au dispositif d'entrée sortie série et d'autre part au bus parallèle de sorte que les données entrantes et sortantes transmises en série dans des lignes du bus parallèle sont déviées vers les dispositifs d'entrée sortie série respectifs.

## Description

### Domaine de l'invention

La présente invention concerne le domaine des unités d'utilisateur de systèmes de télévision numérique. Ces unités consistent, en général, en des décodeurs (set-top-box), ordinateurs personnels, téléviseurs etc. auxquels est connecté un module de contrôle d'accès et de décryption. Plus particulièrement, l'objet de l'invention se situe au niveau de l'interface de connexion du module à l'unité d'utilisateur hôte.

### Arrière plan technique

Les décodeurs utilisent pour la sécurité de l'accès aux données numériques audio/vidéo deux éléments réunis, chargés respectivement de la décryption et du contrôle d'accès, formant un module CAM (Control Access Module). II se présente sous la forme d'un boîtier normalisé détachable muni d'un lecteur de carte à puce et d'un connecteur à insérer dans un décodeur. Un exemple est décrit dans le brevet US6443361. Un tel module fourni par un opérateur de télévision à péage décrypte un ou des flux de données audio/vidéo en provenance d'un câble, d'un émetteur terrestre hertzien ou d'un satellite en fonction de clés ou mots de contrôle reçus de l'élément dédié au contrôle d'accès.

L'élément de contrôle d'accès consiste généralement en une carte à puce, insérée dans le lecteur du module CAM, réputée inviolable dans laquelle les droits d'un utilisateur sont stockés. Les messages d'administration du système (message de contrôle ECM et messages de droits EMM) sont dirigés vers cet élément qui dispose des clés de transmission nécessaires à la décryption de ces messages. Les mots de contrôles (CW) contenus dans les messages de contrôle ECM sont retournés à l'élément de décryption si les droits sont présents dans ledit élément de contrôle d'accès.

Un module CAM est compatible au format PCMCIA (Personal Computer Memory Card International Association) et relié à l'unité hôte via une interface normalisée DVB-Cl (Digital Video Broadcasting - Common Interface).

L'interface commune DVB-Cl est défini par la norme européenne EN50221 "Common Interface Specification for Conditional Access and other Digital Video Broadcasting Decoder Applications" éditée par le CENELEC (Comité Européen de Normalisation Électrotechnique). Ce document décrit une interface commune en normalisant la structure des données, le codage des canaux, les informations de service, l'interface avec l'unité hôte et avec le système d'accès conditionnel. Ce dernier est utilisé pour contrôler l'accès à un service diffusé consistant en un ensemble de flux élémentaires offert à l'utilisateur sous forme d'un programme de télévision par exemple. Selon ce document, le module CAM exécute des applications en communicant avec l'unité hôte et en fournissant à l'utilisateur des fonctionnalités complémentaires à celles incluses dans l'unité hôte telles que le système d'accès conditionnel ou un guide électronique de programmes.

Cette interface commune se compose de deux parties: l'interface du flux de transport et l'interface de commande.
- L'interface du flux de transport véhicule les paquets de données MPEG-2 dans les deux directions: du module CAM vers l'unité hôte et vice-versa. Lorsque le module CAM autorise l'accès à un service du flux de transport et que ce service a été sélectionné par l'unité hôte, les paquets de ce service sont retournés décryptés et les paquets des autres services restent inchangés.

Cette interface comporte une entrée de 8 bit parallèles vers le module CAM et une sortie séparée de 8 bit parallèles associée à des signaux de contrôle et à un signal d'horloge de un octet.
- L'interface de commande véhicule toutes les communications entre la ou les applications actives dans le module CAM et l'unité hôte. Elle comporte un bus de données et d'adresses bidirectionnel de 8 bit et des signaux de contrôle.

L'interface commune DVB-Cl peut accepter plusieurs modules connectés à une unité hôte avec un maximum de 15 modules. L'interface du flux de transport est connectée en chaîne, ce qui signifie que le premier module est connecté au second qui est connecté au troisième et ainsi de suite sans connexion en retour au premier module. L'interface de commande est connectée simultanément et séparément à chaque module pour que les échanges de données entre le module et l'unité hôte s'effectuent indépendamment pour chaque module. Lorsque qu'un module est déconnecté la connexion de l'interface de commande est maintenue avec les autres modules sans être perturbée ou interrompue.

Une telle configuration permet de traiter plusieurs flux provenant de sources différentes avec la même unité hôte. Cette solution présente les inconvénients d'être encombrante, onéreuse et surtout peu performante. En effet, le débit et la vitesse de traitement simultané des données de plusieurs flux transitant à travers une interface comportant un bus parallèle sont limités par des contraintes matérielles. Lorsque le débit des données augmente, le bus parallèle produit des interférences électromagnétiques provoquant une dégradation de la qualité des signaux échangés.

Une autre solution connue est celle de l'interface CableCARD (voir OpenCable™ Specifications CableCARD™ Interface 2.0 Specification, OC-SP-CCIF2.0-104-060126) d'un module M-CARD configuré en M-mode (multi stream mode) et capable de traiter plusieurs flux de transport. Selon un exemple, l'unité hôte comprend plusieurs tuners sources de flux de données connectés à un multiplexeur. Ce dernier transmet un paquet de transport MPEG à la fois à travers l'interface du flux de transport vers le module M_CARD. L'unité hôte identifie chaque paquet du flux de transport du multiplex en ajoutant une pré-entête à l'entête du transport MPEG. Cette pré-entête contient un identificateur de flux de transport de 8 bit indiquant à quelle flux de transport appartient le paquet ajouté. Afin de supporter plusieurs flux, la largeur de bande de l'interface physique entre le module et l'unité hôte est augmentée de 27/38 Mbit/s à 200 Mbit/s pour l'ensemble des données des paquets de transport entrant et sortant simultanément du module. Cette largeur de bande est suffisante pour 5 flux de transport simultanés provenant de 5 tuners.

Cette capacité de traitement de flux multiples permet aussi la décryption de plusieurs programmes dans chaque flux de transport grâce à une interface de commande améliorée. L'unité hôte peut également indiquer, pour chaque flux de transport, quels programmes et quels flux élémentaires individuels doivent être décryptés par le module.

L'interface du flux de transport de l'interface commune CableCARD comporte aussi un bus parallèle de 8 bit dans chaque sens comme dans la configuration de l'interface DVB-Cl standard. Les inconvénients soulevés plus haut inhérents aux bus parallèles subsistent en plus de la relative complexité du traitement des flux multiples du module M-CARD notamment par l'apport d'entêtes supplémentaires.

### Description sommaire de l'invention

Le but de la présente invention est de pallier d'une part les défauts des bus parallèles de l'interface du flux de transport et d'autre part d'augmenter l'efficacité, la vitesse de traitement de flux multiples et le débit des données échangées entre le module CAM et l'unité hôte.

Ce but est atteint par un module de contrôle d'accès CAM destiné à décrypter et à contrôler l'accès à au moins un flux de données numériques provenant d'une unité hôte à laquelle le module CAM est connecté comprenant une interface de connexion reliant ledit module de contrôle d'accès CAM et l'unité hôte comportant un bus parallèle dans lequel transitent les données numériques du flux et un bus de commande dans lequel transitent des données de commande, les deux bus échangeant des données de manière bidirectionnelle entre le module de contrôle d'accès CAM et l'unité hôte, caractérisé en ce qu'il comprend un dispositif d'entrée sortie série et un dispositif d'aiguillage connecté d'une part au dispositif d'entrée sortie série et d'autre part au bus parallèle de sorte que les données du flux entrantes et sortantes de l'interface de connexion transmises en série par des lignes du bus parallèle sont déviées vers le dispositif d'entrée sortie série.

Selon une configuration de l'interface, cette solution permet de transmettre en série deux flux de transport entrant et sortant du module de contrôle d'accès en utilisant 16 lignes du bus parallèle totalisant 22 lignes, chaque ligne correspondant à un bit. Pour chaque flux, 4 bit sont transmis dans une direction et 4 bit dans l'autre direction. Les bits restants du bus parallèle associés dans la configuration standard aux signaux de contrôle et d'horloge peuvent être attribués soit à la transmission de flux supplémentaires, soit à des extensions des fonctionnalités du module.

Selon un exemple de réalisation, le module CAM est équipé d'une extension de mémoire mise à disposition de l'unité hôte servant à stocker des applications spécifiques à l'opérateur qui est en général également le fournisseur du module.

Le dispositif d'aiguillage permet de dévier les lignes du bus parallèle vers le dispositif d'entrée sortie série seulement si l'unité hôte est configurée pour la transmission en série des données des flux.

Le module de contrôle d'accès comporte de plus des moyens de reconnaissance de la configuration par l'unité hôte. En effet, la nouvelle configuration de l'interface du module CAM est compatible aussi bien avec le bus en mode parallèle qu'en mode série. En effet le module CAM commute automatiquement en mode série lorsque l'unité hôte accepte ce mode. De même, l'unité hôte est compatible à la fois avec le bus parallèle et le bus série et elle commute en mode série lorsque le module CAM accepte ce mode.

L'invention porte également sur une unité hôte destinée à recevoir au moins un flux de données numériques encryptées à laquelle est connecté un module CAM de contrôle d'accès et de décryptage du flux, ladite unité hôte comprend une interface de connexion reliant ladite unité au module de contrôle d'accès CAM comportant un bus parallèle dans lequel transitent les données numériques du flux et un bus de commande dans lequel transitent des données de commande, les deux bus échangeant des données de manière bidirectionnelle entre l'unité hôte et le module de contrôle d'accès CAM, caractérisée en ce qu'elle comprend un dispositif d'entrée sortie série et un dispositif d'aiguillage connecté d'une part au dispositif d'entrée sortie série et d'autre part au bus parallèle de sorte que les données du flux entrantes et sortantes de l'interface de connexion transmises en série par des lignes du bus parallèle sont déviées vers le dispositif d'entrée sortie série.

### Brève description des figures

L'invention sera mieux comprise grâce à la description détaillée qui va suivre et qui se réfère aux figures annexées données à titre d'exemples nullement limitatif.

La figure 1 illustre un schéma bloc d'une interface entre un module de contrôle d'accès et une unité hôte selon l'art antérieur comprenant un bus parallèle pour transmettre les données du flux et un bus parallèle véhiculant des signaux de commande.

La figure 2 illustre un schéma bloc d'une interface entre un module de contrôle d'accès et une unité hôte selon l'invention comprenant des bus série pour transmettre les données des flux et des signaux de commande.

La figure 3 illustre un schéma bloc d'un module de contrôle d'accès connecté à une unité hôte. Le module et l'unité hôte étant équipé chacun d'un dispositif d'entrée sortie série et d'un dispositif d'aiguillage, ces éléments étant connectés à des lignes du bus parallèle. Le module inclut de plus une mémoire connectée en série avec l'unité hôte via le dispositif d'aiguillage et le dispositif d'entrée sortie série.

### Description détaillée de l'invention

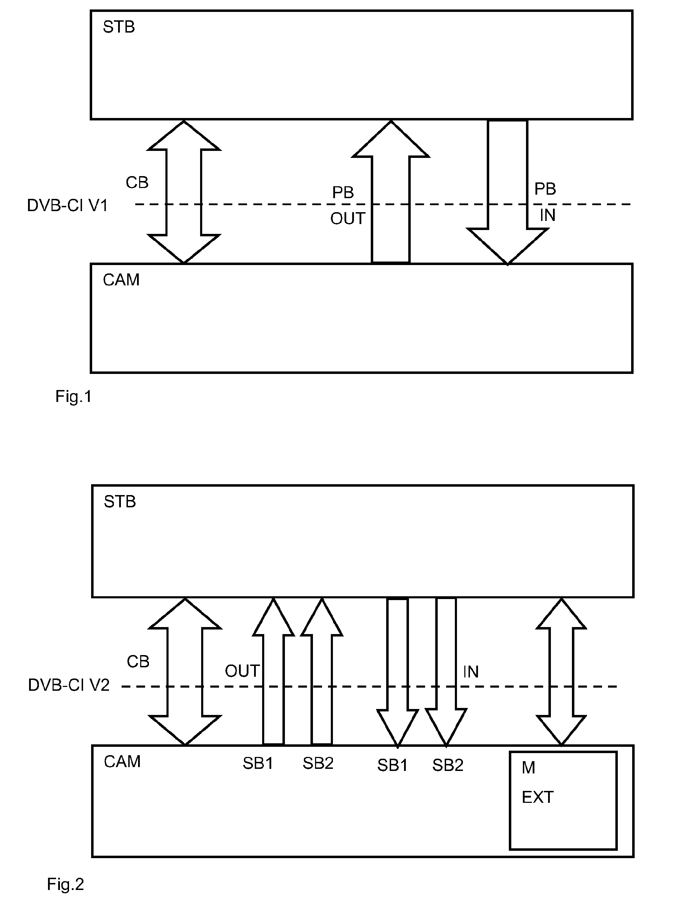

La figure 1 représente schématiquement la configuration de l'interface commune DVB-Cl selon la norme EN50221 servant à connecter un module CAM à une unité hôte (STB). Cette interface connue, appelée DVB-Cl V1, comprend un bus parallèle de 11 lignes ou bit entrant (IN) chargé de transmettre les données encryptées d'un flux de transport au module CAM et un bus de 11 bit sortant (OUT) pour transmettre les données du flux décryptées par le module CAM à l'unité hôte (STB). Parmi les 11 bits entrants et les 11 bits sortant du bus, 2 x 8 bits sont attribués aux données et 2 x 3 bits sont consacrés à des signaux de contrôle et d'horloge transitant dans chaque direction. L'interface inclut également un bus parallèle (CB) bidirectionnel réservé aux signaux de commande échangés entre les applications logicielles actives de l'unité hôte et le module CAM.

Le schéma de la figure 2 montre la configuration de l'interface appelée DVB-Cl V2 selon la présente invention. Le bus parallèle bidirectionnel de 2 x 11 bit est remplacé par deux bus série (SB1, SB2) entrant (IN) et sortant (OUT) de 4 bit (1 bit de données et 3 bits de contrôle) chacun. Cette modification de l'interface permet à l'unité hôte (STB) de traiter deux flux de transport simultanément dans chaque direction au lieu d'un seul flux comme dans la configuration précédente DVB-Cl V1.

L'interface (DVB-Cl V2) comprend également un bus série supplémentaire bidirectionnel de 6 bits reliant une mémoire (M) incluse dans le module CAM à l'unité hôte (STB) via le dispositif d'aiguillage (SW) et le dispositif d'entrée sortie série (SER I/O) relié à la mémoire (M). Cette dernière permet de stocker des données d'application propres au module CAM afin de rendre l'unité hôte (STB) indépendante du fournisseur du module CAM. En effet, dans le domaine de la télévision à péage, l'unité hôte (STB) est un décodeur de données multimédia universel auquel est connecté un module CAM dédié à l'opérateur gérant les flux qu'il diffuse par câble, par satellite ou antenne terrestre. Selon une variante la mémoire (M) peut être soit remplacée soit complétée par d'autres fonctionnalités étendues que l'opérateur désire inclure dans le module CAM pour améliorer ses performances ou faciliter l'accès à certains services. Dans un exemple, la mémoire (M) peut faire office de module de sécurité pour un module CAM sans carte à puce. Dans un autre exemple, la mémoire, ou plutôt son contenu, peut compléter les fonctions de sécurité de la carte à puce insérée dans le module CAM et/ou sécuriser la connexion du module CAM à l'unité hôte par un système à clés d'appariement empêchant l'utilisation du module CAM sur une unité hôte (STB) non autorisée.

Selon une autre variante, il est possible de configurer ce bus série (EXT) supplémentaire afin de l'adapter à la transmission d'un troisième flux de transport à la manière des deux bus série (SB1, SB2) décrits précédemment.

Dans cette version de l'interface DVB-CI V2, le bus bidirectionnel de commande (CB) reste inchangé par rapport à la version standard de l'interface DVB-CI V1 telle que représentée à la figure 1. Seules les commandes transmises via ce bus (CB) peuvent être adaptées aux caractéristiques de l'interface DVB-CI V2.

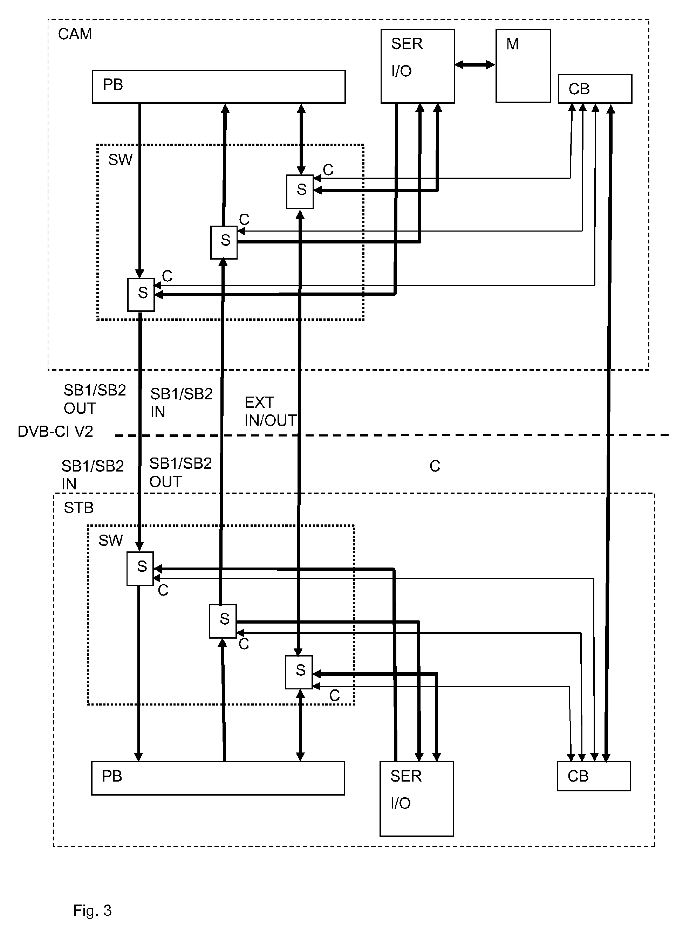

Le schéma bloc de la figure 3 montre les éléments mis en oeuvre dans un module CAM et dans une unité hôte (STB) pour constituer une interface de connexion DVB-CI V2 selon l'invention.

Le module CAM comprend un dispositif entrée / sortie série (SER I/O) recevant les données du flux de transport transmises en série par de l'unité hôte (STB) via 4 lignes d'entrée (IN) du bus parallèle (PB) en traversant un dispositif d'aiguillage (SW) formé d'un ensemble de commutateurs (S) commandés par un signal (C) de commande. Les données du flux une fois décryptées par le module CAM sont retournées en série à l'unité hôte (STB) via 4 lignes de sortie (OUT) du bus parallèle (PB) à travers un commutateur (S).

L'unité hôte (STB) comprend les mêmes éléments (SER I/O), (SW) configurés symétriquement par rapport à ceux du module CAM de manière à relier les lignes d'entrées (IN) du bus série (SB1, SB2) du module CAM aux lignes de sorties (OUT) du bus série (SB1, SB2) de l'unité hôte (STB) et vice versa.

L'avantage d'une transmission en série des données est que d'une part elle nécessite un nombre de lignes réduit et d'autre elle peut s'effectuer à très haut débit jusqu'à 480 Mbit/s (cf. USB 2, Universal Serial Bus) sans perturbations. Les lignes à disposition du bus parallèle (PB) peuvent ainsi être attribuées à la transmission série bidirectionnelle de plusieurs flux de transport en même temps. Dans l'application de la télévision numérique, les flux simultanés sont utilisés par exemple lors de l'enregistrement de programmes d'un flux pendant la visualisation de contenus provenant d'un autre flux ou lors de la visualisation simultanée de plusieurs canaux sur un même affichage (PIP, Picture In Picture). Dans cet exemple, le décodeur (l'unité hôte) comprend plusieurs tuners chargés de sélectionner et d'acheminer les différents flux transmis par le canal de diffusion vers les différents processeurs de traitement.

Les commutateurs (S) des dispositifs d'aiguillage (SW) du module CAM et de l'unité hôte (STB) sont commandés lors de la connexion au moyen de signaux (C) issus du bus de commande (CB). En effet, lors du démarrage du module CAM; l'unité hôte détecte le type de module CAM ainsi que la configuration de son interface grâce à des paramètres stockés dans le module transmis via le bus de commande (CB).

Par défaut, lors de l'insertion d'un module CAM dans une unité hôte, cette dernière tente d'établir une connexion de l'interface en mode parallèle. Lorsque cette tentative échoue, l'unité hôte transmet une commande aux dispositifs d'aiguillage (STB) respectivement du module CAM et de l'unité hôte (STB) pour commuter ceux-ci en mode série.

Lorsque le module CAM et l'unité hôte (STB) sont configurés avec une interface de transmission série (DVB-CI V2), les dispositifs d'aiguillage (SW) respectifs sont activés de manière à transmettre les données en série vers les dispositifs entrée /sortie série (SER I/O) correspondants. Le commutateur (S) du bus d'extension (EXT) est également activé permettant à l'unité hôte (STB) de se connecter au bus série en vue de l'exploitation des applications stockées dans la mémoire (M) par exemple.

Lorsque l'unité hôte (STB) seule est équipée de l'interface DVB-Cl V2, un module CAM standard avec l'interface DVB-Cl V1 sera immédiatement accepté grâce au démarrage par défaut de l'unité hôte en mode parallèle, le dispositif d'aiguillage de l'unité hôte (STB) étant désactivé au démarrage.

Dans le cas contraire d'une unité hôte (STB), équipée de l'interface standard DVB-Cl V1, connectée à un module CAM configuré avec l'interface DVB-Cl V2, le dispositif d'aiguillage (SW) du module est désactivé de manière à conserver la configuration parallèle du bus (PB) comme dans le cas d'un module standard avec l'interface DVB-CI V1. Le dispositif entrée / sortie série (SER 1/O) et le bus d'extension (EXT) vers la mémoire (M) ou les autres fonctionnalités du module CAM sont ainsi mis hors service.

Il est à noter que le microprogramme (firmware) des unités hôte (STB) devra être adapté en conséquence de manière à accepter aussi bien les modules CAM avec l'interface configuré en série DVB-CI V2 que ceux avec l'interface configuré en parallèle DVB-CI V1.

Ainsi une unité hôte (STB) est compatible avec un module CAM quelle que soit la configuration de l'interface du module ou de celle de l'unité elle-même.

## Revendications

1. Module de contrôle d'accès CAM destiné à décrypter et à contrôler l'accès à au moins un flux de données numériques provenant d'une unité hôte (STB) à laquelle le module CAM est connecté comprenant une interface de connexion reliant ledit module de contrôle d'accès CAM et l'unité hôte (STB) comportant un bus parallèle (PB) dans lequel transitent les données numériques du flux et un bus de commande (CB) dans lequel transitent des données de commande, les deux bus échangeant des données de manière bidirectionnelle entre le module de contrôle d'accès CAM et l'unité hôte (STB), **caractérisé en ce qu'**il comprend un dispositif d'entrée sortie série (SER I/O) et un dispositif d'aiguillage (SW) connecté d'une part au dispositif d'entrée sortie série (SER I/O) et d'autre part au bus parallèle (PB) de sorte que les données du flux entrantes et sortantes de l'interface de connexion transmises en série par des lignes du bus parallèle (PB) sont déviées vers le dispositif d'entrée sortie série (SER I/O).

2. Module selon la revendication 1, **caractérisée en ce qu'**il comprend une mémoire (M) additionnelle connectée à un bus d'extension série (EXT) bidirectionnel communiquant avec l'unité hôte (STB) via le dispositif d'entrée sortie série (SER I/O), ledit bus série étant formé de lignes du bus parallèle (PB) connectées via le dispositif d'aiguillage (SW) au dispositif d'entrée sortie série (SER I/O) relié à la mémoire (M).

3. Module selon les revendications 1 et 2, **caractérisée en ce que** le dispositif d'aiguillage (SW) forme un ensemble de commutateurs (S) connectés chacun sur une ligne du bus parallèle (PB), lesdits commutateurs (S) étant commandés par un signal (C) issu du bus de commande (CB) lors du dialogue entre le module CAM et l'unité hôte (STB).

4. Module selon les revendications 1 à 3 **caractérisé en ce qu'**il comprend une interface de connexion avec l'unité hôte (STB) comportant deux bus série (SB1, SB2) bidirectionnels chargés de la réception des données encryptées de deux flux en provenance de l'unité hôte (STB) et de la transmission des données des deux flux décryptées vers l'unité hôte (STB), et un bus d'extension série (EXT) bidirectionnel connecté à la mémoire (M) additionnelle dans laquelle sont stockées des applications exploitées par l'unité hôte (STB).

5. Unité hôte (STB) destinée à recevoir au moins un flux de données numériques encryptées à laquelle est connecté au moins un module CAM de contrôle d'accès et de décryptage du flux, ladite unité hôte (STB) comprend une interface de connexion reliant ladite unité au module de contrôle d'accès CAM comportant un bus parallèle (PB) dans lequel transitent les données numériques du flux et un bus de commande (CB) dans lequel transitent des données de commande, les deux bus échangeant des données de manière bidirectionnelle entre l'unité hôte et le module de contrôle d'accès CAM, **caractérisée en ce qu'**elle comprend un dispositif d'entrée sortie série (SER I/O) et un dispositif d'aiguillage (SW) connecté d'une part au dispositif d'entrée sortie série (SER I/O) et d'autre part au bus parallèle (PB) de sorte que les données du flux entrantes et sortantes de l'interface de connexion transmises en série par des lignes du bus parallèle (PB) sont déviées vers le dispositif d'entrée sortie série (SER I/O).

6. Unité selon la revendication 5, **caractérisée en ce que** le dispositif d'aiguillage (SW) forme un ensemble de commutateurs (S) connectés chacun sur une ligne du bus parallèle (PB), lesdits commutateurs (S) étant commandés par un signal (C) issu du bus de commande (CB) lors du dialogue entre le module CAM et l'unité hôte (STB).

7. Unité selon les revendication 5 et 6 **caractérisée en ce qu'**elle comporte des moyens de reconnaissance de la configuration de l'interface du module CAM, lesdits moyens générant un signal de commande (C) activant ou désactivant les commutateurs (S) du dispositif d'aiguillage (SW) de l'unité et du module CAM en fonction du mode de connexion série ou parallèle de l'interface.

8. Unité selon les revendications 5 à 7 **caractérisée en ce qu'**elle comprend une interface de connexion avec le module CAM comportant deux bus série (SB1, SB2) bidirectionnels chargés de la réception des données décryptées de deux flux en provenance du module CAM et de la transmission des données des deux flux encryptées vers le module CAM, et un bus d'extension série (EXT) bidirectionnel.
